(19) Europäisches Patentamt

European Patent Office

Office européen des brevets

(11) **EP 2 136 301 A1**

## (12) EUROPEAN PATENT APPLICATION

(43) Date of publication:
**23.12.2009 Bulletin 2009/52**

(51) Int Cl.:
**G06F 17/21** (2006.01)    *G06F 17/30* (2006.01)

(21) Application number: **08158690.1**

(22) Date of filing: **20.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **NTT DoCoMo, Inc.**
**Tokyo (JP)**

(72) Inventors:
• **Boehm, Sebastian**
 **81671, Munich (DE)**

• **Luther, Marko**
 **82256, Fuerstenfeldbruck (DE)**
• **Wagner, Matthias**
 **80999, Munich (DE)**

(74) Representative: **Betten & Resch**
 **Patentanwälte**
 **Theatinerstrasse 8**
 **(Fünf Höfe)**
 **80333 München (DE)**

(54) **Method and apparatus for visualising a tag cloud**

(57)    A method of visualizing a tag cloud of individual tags, wherein each is a certain piece of information and is formed of one or more characters, and wherein for a tag metainformation has been measured over a certain time interval so that there exists a vector of metainformation measurements for said tag, each component of said vector representing a certain metainformation measurement, said method comprising:
dividing a tag into a plurality of slices;
mapping said vector of metainformation measurements of said tag over time such that each slice of said tag corresponds to one or more of said metainformation measurements;
visualizing the temporal change of said metainformation measurements for said tag by changing for each of said slices one or more of the following parameters depending on the corresponding one or more metainformation measurements:
the font size,
the color saturation;
the inner space between said slices;
the actual height on which the individual slices are placed on a virtual stairway, whereas one distinct significance measurement is indicated by the actual height with respect to a baseline.

Fig. 2

**Description**

**FIELD OF THE INVENTION**

The present invention relates to a method and an apparatus for visualizing a tag cloud.

**BACKGROUND OF THE INVENTION**

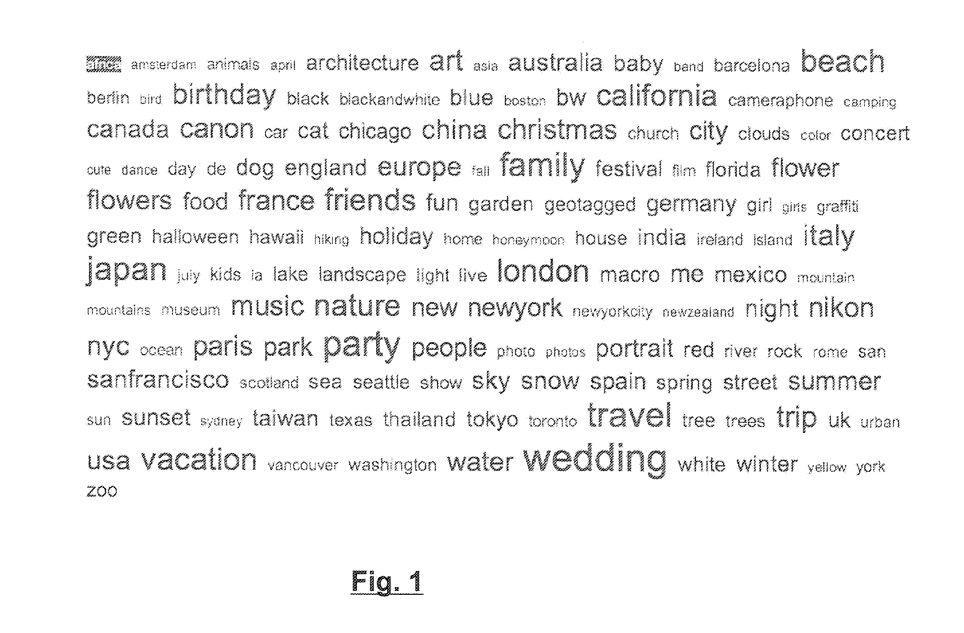

Tag clouds have become a popular way to represent (unstructured) data by assigning significance values (based on the frequency within the given dataset) to tags within multiple, congregated tags. A so-called tag cloud can be seen as an aggregation of numerous tags with or without a certain order, for instance tags within a cloud are often sorted alphabetically. The significance of a tag is indicated by the font size used for the respective tag, so a lower significance is indicated by a smaller font size for the given tag. Here, a tag is a keyword that refers to a certain piece of information, therefore enabling a simple classification and categorization. In the following, the term tag will be used as an umbrella term for any single piece of information that can be represented within a cloud formation and that may also be defined by several attributes not essentially visible in the first place. Today, tag clouds are mostly used for finding popular data items that have been previously marked (tagged) with a certain keyword for later reference and to indicate popular data items within a larger dataset based on their frequency within the dataset. An example of a conventional tag cloud in which the significance of a tag is indicated by the font size used for the respective tag is shown in Fig. 1.

Despite their popularity, tag clouds are rather limited with respect to the amount of meta-data (descriptions about the actual information) that can be visualized and do only provide limited means of navigating through the represented dataset. One major drawback of common tag cloud visualization techniques is the fact that only a snapshot of a given dataset for a certain moment in time can be displayed, thus only the latest sample of the dataset can be represented. As a result, current tag cloud visualizations do not allow for drawing any conclusions about the significance of one or multiple tags *over time*. Hence, the application of tag clouds for the representation of dynamic and historic information is limited since only popular items at a certain moment in time can be highlighted. The significance as well as the correlation distribution within a dataset over time is so far not considered.

Being mostly used for the visualization and representation of unstructured information, each tag within the cloud is treated and represented independently of other tags of the same cloud. This means that even simple correlations between tags that indicate basic co-occurrence measurements or potentially more advanced semantic similarities cannot be expressed and therefore do not influence the visual significance of single tags. Current tag clouds clearly lack the possibility to indicate a certain correlation or connectedness between tags of the same cloud, and thus limit the scope of tag clouds to visualize implicit information explicitly and only provide very basic means of interacting with the represented data.

So far there is no solution known that allows for visualizing the temporal significance and correlation distribution within single tags or groups of tags in a 2D tag cloud for identifying temporal coherences that may also be used to navigate through historic samples of the dataset and to restrict queries based on the significance and correlation distribution over time. Existing tag cloud representations are basically limited to the visualization of a single tags' frequency within a given dataset at a certain moment in time. As a result, the application of tag clouds for navigating through a given dataset is very limited.

In "Yusef Hassan-Montero, Victor Herrero-Solana, Improving Tag Clouds as Visual Information Retrieval Interfaces. International Conference on Multidisciplinary Information Sciences & Technologies, 2006" the authors propose clustering techniques to group tags within a cloud formation that have been identified as "similar", based on relative co-occurrence measurements. Even though this approach does help to visually identify similar tags, no temporal aspects with respect to the tag's significance distribution as well as their correlation distribution are considered. In addition, the proposed visualization technique does not improve the functionality of the tag cloud with respect to navigation through the given dataset. Also, the grouping algorithm is only taking co-occurrence measurements into account, rather than a common trend or the correlation distribution over time.

In "Owen Kaser and Daniel Lemire, Tag-Cloud Drawing: Algorithms for Cloud Visualization, Tagging and Metadata for Social Information Organization. World Wide Web Conference, 2007", the authors focus on algorithms for improving existing tag cloud visualization techniques with respect to optimizing the amount and placement of white space within the cloud. The authors also propose to utilize the font spacing attribute to describe the visual weight and importance of single tags, however, the inner-tag space remains constant and does not encode a temporal significance or correlation distribution. Grouping of tags based on co-occurrence measurements is applied within the cloud.

An attempt to visualize tags over time is described in" Micah Dubinko, Ravi Kumar, Joseph Magnani, Visualizing Tags over Time. World Wide Web Conference, 2007". The authors follow an animation-based approach, which is why their approach cannot be applied in a static 2D cloud. The principle idea is to present a selection of tags that are meant to represent a pre-defined time interval that has been selected by means of a time-slider. However, this approach is concerned with characterizing a certain time period (by means of a selection of tags) rather than describing tags over time. Furthermore, no query restriction through the interaction with the tags can be achieved. The selection of tags is only based on their frequency within the given time interval.

In "Blake Shaw, Utilizing Folksonomy: Similarity Metadata from the Del.icio.us System, http://www.metablake.com/webfolk/web-project.pdf", the author defines a similarity measurement that goes beyond a basic co-occurrence measurement. The similarity measurement considers information about the actual tag contributor and his tag selection in the past. As a result, a distance-based visualization of similar tags is proposed. Again, no temporal aspects are considered with respect to a tag's significance as well as correlation distribution over time, neither for the actual visualization of tags nor for the proposed interaction pattern with the cloud. Therefore, no grouping of tags based on those temporal aspects (their trend or correlation distribution over time) can be applied.

## SUMMARY OF THE INVENTION

According to one embodiment there is provided a method of visualizing a tag cloud of individual tags, wherein each is a certain piece of information and is formed of one or more characters, and wherein for a tag metainformation has been measured over a certain time interval so that there exists a vector of metainformation measurements for said tag, each component of said vector representing a certain metainformation measurement at a certain time, said method comprising:

dividing a tag into a plurality of slices;
mapping said vector of metainformation measurements of said tag over time such that each slice of said tag corresponds to one or more of said metainformation measurements;
visualizing the temporal change of said metainformation measurements for said tag by changing for each of said slices one of the following parameters depending on the corresponding one or more metainformation measurements:
the font size,
the color saturation;
the inner space between said slices.

In this way metainformation which has been recorded over time for a certain tag may be visualized in the tag cloud so that the resulting tag cloud offers temporal information about how measured (or inputted) data change over time. This can then be used for an interface which enables querying or browsing said data based on such temporal aspects and thereby opens a new dimension of how to interact with and handle data displayed by tag clouds for the purpose of querying and browsing.

According to one embodiment wherein said metainformation is one of the following:

the significance of a tag,

the correlation significance between tags.

These two types of information are of particular interest for a user when browsing a dataset or when querying data, and therefore it is advantageous if one or both of them ca be displayed.

According to one embodiment the total period of time which is mapped onto a certain tag is graphically represented by the total length of said tag.

this gives a user an impression about the temporal coverage of a certain time as indicated in the tag cloud.

According to one embodiment the method comprises:

identifying for each tag to which temporal pattern of a plurality of predefined temporal pattern it belongs, and grouping the tags together which belong to the same pattern.

This makes it easier for a user to identify those tags which show the same temporal pattern, and he may select one of them. Moreover, such a grouping can also be used for browsing or querying, e.g. by selecting a certain group about the tags of which then further information may be retrieved

According to one embodiment a plurality of tags which belonging to the same group of tags are selected by a similarity criterion, or

arbitrarily by a user, and wherein for the tags of said group metainformation is displayed by one or more of the following:

a change in font size;

a change in color saturation.

Grouping claims together can make sense, either by selecting them by a user of by a similarity criterion (such as similar shape of significance over time), and then for the tags of the group metainformation may be display by means of change in font size or color saturation

According to one embodiment a plurality of tags which form a group is aligned in a row and said group is divided into slices, each slice representing a certain time period, wherein the vector of metainformation to be visualized is representing the correlation significance between said elements of said group over time, said vector of metainformation being mapped onto said slices of said group of tags such that the visual representation of said group of tags illustrates the change of the correlation between the tags of said group over time based on a change of font size or color saturation.

This makes it possible to visually display the temporal change of the overall correlation between the elements of the group of tags over time.

In one embodiment thereby the ordering of the tags in said group is chosen such that the individual tag having the highest individual significance is located where the correlation significance is highest (which may mean at the location where the font size is largest or the color saturation is highest).

According to one embodiment the method comprises:

selecting a group of tags based on a similarity criterion and aligning them in a row and said group being divided into slices, wherein the overall shape of the group is based on the temporal change of the metainformation which corresponds to the similarity criterion, and/or

with the tags of the group being ordered such that the tag of the group which has the highest individual significance is located at the position with the highest font size or color saturation and the other tags are ordered according to their correlation with the tag having the highest significance.

By the overall shape of the group being dictated by the temporal change of the similarity criterion it becomes possible to readily see how the similarity criterion (which may e.g. a certain pattern of the individual tag significance, such as "rising" or "falling") looks like. Moreover, by the ordering of the tags in the row according to correlation with the tag having the highest significance furthermore correlation information can be visualized.

According to one embodiment a group of tags has been selected based on a similarity criterion according to which the members of said group have a certain similarity, and the overall correlation significance of the correlation between the group members over time is visualized by

a changing font size which changes in accordance with the correlation significance change over time; or

a color saturation change which changes in accordance with the correlation significance change over time.

In this way the overall correlation between the members of the group may be visualized.

According to one embodiment the method comprises:

selecting one tag as reference tag;

graphically visualizing the correlation of other tags with said selected tag by displaying said other tags such that the degree of correlation with said reference tag is expressed by

the font size of said other tags; or

the color saturation of said other tags.

In this way a correlation between a reference tag and other tags may be visualized.

According to one embodiment the inner significance of a tag over time is expressed by one of its font size or color saturation; and

the correlation significance of a tag with said selected tag over time is represented by the other one of said font size or said color saturation.

In this way the significance of a tag itself and furthermore the significance of its correlation with the reference tag both may be visualized over time.

According to one embodiment the method comprises:

a reference tag being selected and other tags are simultaneously displayed in a manner which indicates their respective correlation with said selected tag over time, wherein

said correlation is indicated by

the space between slices or characters of a tag are changing in accordance with the change of said correlation, or

the color saturation changing in accordance with the change of said correlation.

According to one embodiment the method comprises:

in addition to visualizing the correlation of a tag with said reference tag over time,
further visualizing the overall correlation of said tag with said reference tag.

This enables also the visualization of the overall correlation of a certain tag with the reference tag in addition to the correlation as it changes over time. The overall correlation may e.g. be displayed by the extension of a single line located close to the tag.

According to one embodiment the visualization of a tag cloud enables the user to query or browse context information as represented by said tag cloud based on the metainformation represented in said tag cloud, said metainformation being one or more of the following:

temporal change of a tag significance over time,
temporal change of a correlation significance between tags over time,
any metainformation about the tags of said tag cloud as graphically visualized by said tag could.

According to one embodiment there is provided an apparatus for visualizing a tag cloud of individual tags, wherein each is a certain piece of information and is formed of one or more characters, and wherein for a tag metainformation has been measured over a certain time interval so that there exists a vector of metainformation measurements for said tag, each component of said vector representing a certain metainformation measurement, said apparatus comprising:

means for dividing a tag into a plurality of slices;
means for mapping said vector of metainformation measurements of said tag over time such that each slice of said tag corresponds to one or more of said metainformation measurements;
means for visualizing the temporal change of said metainformation measurements for said tag by changing for each of said slices one of the following parameters depending on the corresponding one or more metainformation measurements:

the font size,
the color saturation.

In this way an apparatus according to an embodiment of the invention may be implemented.
According to a further embodiment the apparatus comprises means for carrying out a method according to any of the embodiments of the invention.
According to one embodiment there is provided a computer program comprising computer program code which when being executed on a computer enables said computer to carry out a method according to any of the embodiments of the invention.

**DESCRIPTION OF THE DRAWINGS**

Fig. 1 illustrates a tag cloud as known in the art.

Figures 2 to 12 schematically illustrate tag cloud representations according to embodiments of the invention.

**DETAILED DESCRIPTION**

The concept according to an embodiment of the invention considerably extends the basic concept of tag clouds for data visualization and navigation by taking temporal as well as correlation aspects into account. With the proposed visualization and interaction schemes, new ways to represent and query large datasets can be realized as will become apparent in the following.
In particular, it will be described how significant data items in large datasets can be visually described and utilized for browsing based on novel visualization techniques that encode additional information (metainformation) in tag clouds to highlight the significance of single as well as correlated tags over time.
The metainformation can be automatically recorded, e.g. by recording in regular intervals the data from a GPS sensor based on which position information is determined, and based on the position information there may then be automatically recorded a corresponding tag, such as e.g.the name of the city of the position, the name of the location (e.g. office), and the like. The tags may, however, also be based on metainformation which is inputted by a user and represents e.g. the user's context, such as his present mood (lazy, happy, sad, or the like) or his activities (sports, reading, walking). Such metainformation may be inputted by the user and may then be recorded together with the corresponding time. The term "measurement" therefore has to be understood that also the input of metainformation by a user at a certain time may be regarded as a "measurement" of metainformation at a certain point in time.

All such metainformation which is either derived from user input or from automatic measurements may then result in a compilation of several kinds or types of metainformation, where the different kinds or types may be represented by corresponding tags the significance of which is recorded over time (e.g. by the number of occurrence within a certain time interval).

A thus collected pool of context data (or "measurement data") which represents context information over time may be the basis on which the visualization mechanisms of the present invention may be applied in order to enable the user to meaningfully view, browse and query this pool of information. Since the context information may be very different, and since it also contains temporal information, the present interfaces for displaying and querying such a pool of information are not suitable. Accordingly the embodiments of the invention as described in the following can help the user to access this data, to query it and to browse it in a manner which was not possible before.

A tool which may be used to collect the metainformation may be a mobile device such as a mobile phone, a smartphone, or the like. It may execute the automatic measurements (such as position measurements, or any other measurement of data which result from the sensors of the device) and may enable the user to input metainformation which then may be recored together with the corresponding time. The mobile device may then also perform a visualization method as described in the embodiments of the invention by executing a computer program which performs the corrsponding functions, and it may also allow the user to query and browse through the metainformation which results from the data collection by the "measurements" which record metainformation over time, the metainformation corresponding to and being respresented by corresponding tags.

The proposed techniques in one embodiment allow for describing the significance distribution of a tag over time in changing its font characteristics (e.g. by using different font sizes) within the representation of one tag. So in case the significance of a tag has decreased significantly, the font size of the distinct tag decreases, too, and vice versa. As a result, the tendency of the observed significance of multiple tags can be visualized in one (static) cloud, and thus enables a better identification and selection of tags not only based on their current significance, but their significance distribution over time. In addition, being able to visually identify trends of single data items or groups of items, it becomes possible to not only better understand the provided information but also to browse to historic samples of the data as recorded in the past. By selecting distinct parts of a single tag's representation, historic samples of this data item can be revealed. Likewise, through visualizing a tag's significance distribution over time, a trend-based browsing through the given dataset becomes possible. For example, one can choose a tag which has a desired trend over time (e.g. increasing significance) and can search for other tags (and their related information) which have the same trend over time. Therefore the visualization technique of the embodiments of the invention not only visualizes data which has been recorded over time, but it also enables a novel interface to query and browse through such data.

Today, the significance of tags in a cloud is so far only based on their frequency within a given dataset. In some cases, however, the frequency alone is not a suitable indicator for the significance and therefore importance of a tag. Instead, the significance of a tag is also heavily depending on the correlation or connection with other tags in the same cloud as well as the significance of the correlation over time. The correlation degree of two or more tags can be based on co-occurrence measurements and may also indicate a semantic or statistical similarity (closeness) of tags. Existing tag cloud representations do not allow for visualizing the degree of correlation and therefore lack a suitable differentiating factor between tags in one cloud. As a result, navigation trough the dataset and restricting a given query along the lines of correlated tags is not possible.

The visualization and interaction techniques according to embodiments of the invention tackle this constraint by visualizing the correlation factor between tags with either a distinct grouping, color-coding or distance indication. The correlation significance of a group of tags over time can be visualized by adjusting the entire group's shape to match its correlation significance. The color-coding paradigm allows for selecting a certain tag, hereupon highlighted by a reference color with 100% saturation. In one embodiment all correlated tags are accentuated in the same color tone, but based on the correlation degree, the saturation percentage is chosen whereas a higher degree of correlation is equivalent to a higher color saturation. In one embodiment, by adjusting inner-tag white spaces, the correlation degree over time can be represented. In addition, in a further embodiment recent correlation degrees may have a higher emphasis in the overall correlation degree of two given tags.

With the proposed visualization and interaction techniques, new ways to navigate and browse through large datasets become possible through the generation of advanced tag cloud representations. Queries can be restricted based on the significance distribution of single items or groups of tags, and may also allow for browsing through correlated items and provide means to navigate to historic samples of a given dataset. Queries may thus be restricted based on temporal conditions, certain correlation dependencies or similar trends that were identified over time.

With the proposed visualization and interaction paradigms, significant items in datasets can be highlighted not only based on their current significance, but also based on their significance distribution over time and the significance of their correlation with other tags over time. This way, only recently popular (short-term) tags can be isolated and significant tags over a longer period of time and with a high degree of correlation gain more visual weight. In addition, the proposed techniques allow for a better selection of single data items or groups of items based on their significance and correlation distribution over time and allow for querying historic data samples that have been recorded in the past, provide means to isolate groups of tags with a similar significance and correlation trend and to browse through the given dataset based on the correlation degree between tags.

Now embodiments of the invention will be described in somewhat more detail.

At first an embodiment where an Inner-tag significance distribution is visualized will be explained.
A single's tags significance distribution is defined as the number of significance measurements that were recorded within a certain time period. With it, a certain tendency of a tag's importance or interestingness can be described over time.

The proposed visualization and interaction techniques considerably extend existing tag cloud representations, enable the visualization of additional meta-information in static clouds and allow for novel interaction and query restriction patterns. Metadata allows for identifying and highlighting the significance distribution of single tags within the cloud and the correlations between two or more tags over time.

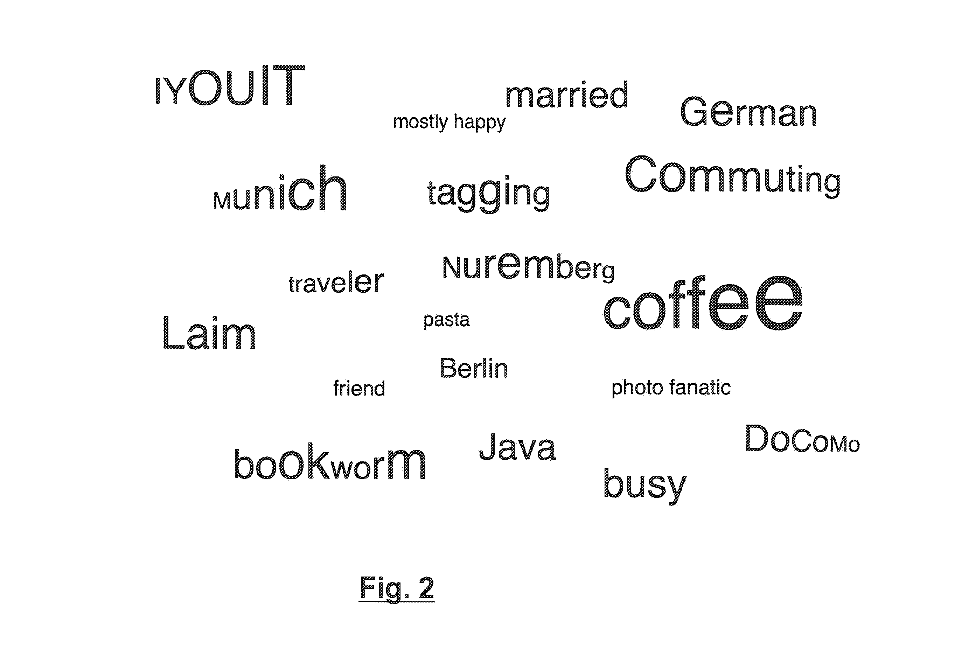

With the proposed visualization and interaction paradigm, the significance of a tag is not only based on its frequency within a given dataset at a certain moment in time (one single value), but may consist of a number of significance levels recorded over time. The resulting significance distribution holds valuable information about the significance of a tag during a certain time period, so whether or not a tag's popularity has been decreasing, increasing or may have remained the same. With the proposed visualization paradigm, this tendency is made visible within a single, static tag cloud, as depicted in Figure 2. In the example below, the increasing significance of the tag "coffee" is indicated by its increasing font size, whereas the tag "commuting" is decreasing in terms of font size and its corresponding significance over time.

The actual font sizes used for a given tag and its significance distribution can be computed by assuming that the number of distinct sections (a section may e.g. a letter or a smaller part of the tag, e.g. a slice of a letter, or any part into which a tag may be divided) of a given tag also restricts the number of significance measurements considered.

With:

$\vec{L}$:      Vector of distinct sections of a given tag
$\vec{S}$:      Vector of significance measurements of a given tag over time
$S_{max}$:      Maximum significance value
$F_{max}$:      Maximum font size
$F_{min}$:      Minimum font size

The formula below maps the given range of significance values to the respective font sizes of a distinct tag, described by the resulting font size vector $\vec{F}$.

$$\vec{F}(\vec{L}, \vec{S}) = \left[ f_0, \ldots, f_k \right]$$

with

$$\forall_{i=0}^{k} f_i = F_{min} + \left( \frac{s_i}{S_{max}} \right) \times (F_{max} - F_{min}),$$

$$(F_{max} - F_{min}) > 0,$$

$$\vec{S} = \left[ s_0, \ldots, s_k \right] \text{ with } \forall_{j=0}^{k} s_j . 0 \leq s_j \leq S_{max},$$

$$\vec{L} = \left[ l_0, \ldots, l_k \right]$$

Through the visual representation of a tag's significance distribution, temporal query restrictions can be defined. The horizontal display of a tag represents the observed time interval, whereas distinct sections of a tag represent a temporal subset of that time interval. The number of time slices (=the sections of the tag) that can be identified as well as the actual number of significance measurements may depend on the overall size of a certain tag. Selecting a certain time slice can be seen as a temporal query restriction, whose result set corresponds to the chosen time interval. This way, single pieces of information in large datasets can be retrieved through further narrowing down the observed time interval. A slice of a tag may correspond to a single character of the tag or it may correspond to a part (a "slice") of a character. In first case the significance indication varies from character to character, but remains the same within a single character. In the latter case the significance indication may even change withn a character, in other words the font size of an individual character may even change within the character.

If the number of sections of the tag and the number of temporal measurements are not the same, in other words if the vector of distinct sections of a given tag and the vector of significance measurements of a given tag over time have a different number of components, then there may be performed a matching such that a plurality of components of one vector are mapped onto a single component of the other vector. This can e.g. be done by choosing the average significance value of the plurality of significances, if several significance components are to be mapped onto a single tag section.

The time interval which is represented by the tags of the tag cloud may be predetermined (e.g. one day, one week, one month or the like), or it may be selected by the user. The user may e.g. choose the time interval which he is most interested in, and based on the collected metainformation the tag cloud which visualizes the temporal development of significance data may be calculated and displayed.

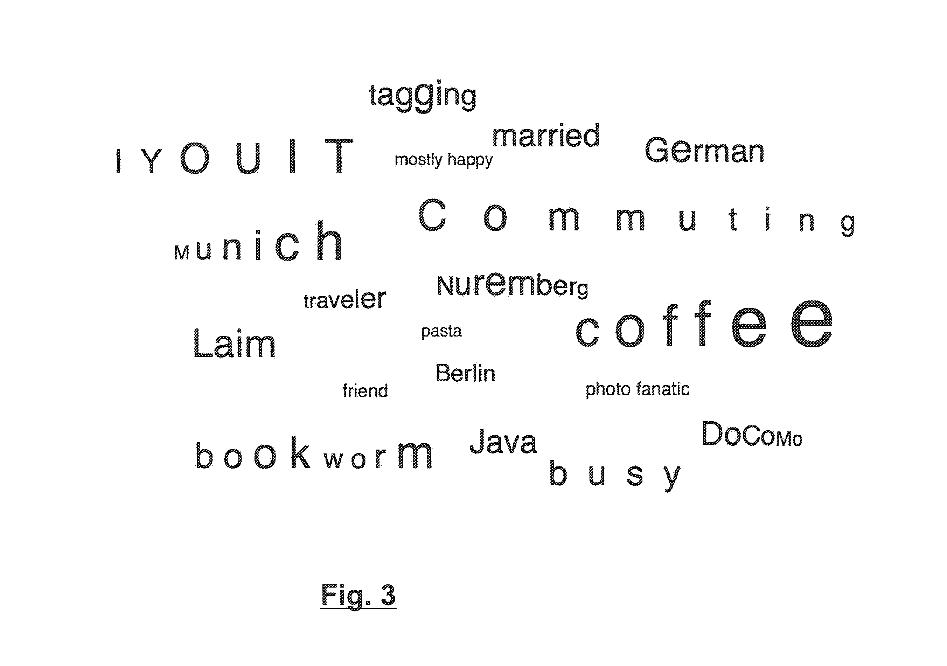

According to one embodiment, since not all tags that form a tag cloud necessarily represent the same observed time interval (e.g. because not for all of them there is enogh metainformation data to cover the whole interval selected by the user for being dvisualized), according to one embodiment an additional indicator for the relative time period considered is used. In this embodiment the total (horizontal) length of a tag is a measure for the total time period over which the significance measurement extends. The length variation to represent different time intervals by different tags can e.g. achieved by varying the inner-tag white spaces. As shown in Figure 3, the variation of inner-tag white spaces increases its horizontal extension, which corresponds to a relatively longer time period. In the example shown in Figure 3, the tag "commuting" covers a longer time period than "nuremberg", for instance.

This additional inner-tag white space or font spacing can be approximated by:

$$\vec{D}(\vec{T}) = \left[ d_0, \ldots, d_k \right]$$

with

$$\forall_{i=0}^{k} d_i = D_{min} + \left( \frac{t_i}{T_{max}} \right) \times (D_{max} - D_{min}),$$

$$(D_{max} - D_{min}) > 0,$$

$$\vec{T} = \left[ t_0, \ldots, t_k \right] \text{ with } \forall_{j=0}^{k} t_j, 0 \le t_j \le T_{max}$$

With:

$d_i$ :        Space or distance in between two inner-tag's sections (e.g. letters)

$D_{min}$ :    Minimum (default) space between two inner-tag's sections (e.g. letters)

$D_{max}$ :    Maximum space between two inner-tag's sections (e.g. letters)

$t_j$ :    Observed time interval for the concerned tag

$T_{max}$ :    Maximum observed time interval for a tag in a given cloud

Alternatively to a variation of the inner-tag white spaces, different font types or variants can be used. Tags rendered in a more condensed font (e.g. Arial Narrow) represent a shorter time interval, regular or wider fonts represent larger time periods (e.g. Arial Regular).

The visualization of a tag cloud as described before enables a user to navigate through context information as represented by such a tag cloud base don temporal information. For example a user may select a tag which with respect to its temporal change represents a rise, so that it has become more significant recently, and thereby the user may choose context information for navigating through a dataset based on temporal information. Another possibility is to select not a single tag but a part of the tag which then represents a certain time interval being a subset of the whole time interval represented by this tag. Such a selection could e.g. be made by drawing a box around the selected part of the tag using the mouse or the cursor in a well known manner, and the thus selected time interval is then applied as a filter or selection criterion when obtaining further information like other information related to the selected tag and time. In one embodiment the selection of a subset in time may lead to a recomputation of the whole tag cloud for the thus selected subset in time, thereby effectively zooming into the tag cloud.

In a relatively simple case, a distinct section of the tag (e.g. one single letter) could be selected (e.g. by clicking on it), which already represents the aforementioned temporal selection and query restriction. In addition, in one embodiment selecting more than one parts of the tag could be accomplished in a similar way as marking a certain text passage in word processing. The selection could then be confirmed by a mouse-click.

In contrast to selecting distinct parts of a tag to restrict the resulting query with respect to the observed time period, the selection of the space in-between a tag according to one embodiment has the opposite effect. In this case, according to one embodiment the considered time period will be extended, resulting in a re-computation of each single tag within the cloud.

Now a further embodiment will be described which makes use of a tendency-based grouping of tags. Having computed the significance distribution of a single tag over time as exemplified in Figure 2, distinct tags can not only be grouped based on their (semantic) similarity or based on simple co-occurrence measurements but can furthermore be grouped based on similar significance trends. In this respect, several types of trends can be identified as listed below (amongst others):

bookwo**rm**    increasing significance with:

$$\forall^{l}_{i>0} \; s_i < s_{i+1} < s_l$$

($s_i$: distinct significance measurement)

bookworm    Decreasing significance with:

$$\forall^{l}_{i>0} \; s_i > s_{i+1} > s_l$$

($s_i$: distinct significance measurement)

booKworm    Recurring, increasing significance with:

bookWorm

$$\forall_{i=0}^{k-1} s_i < s_{i+1} \ \wedge \ \forall_{j=k+1}^{l} s_j < s_{j+1} \ \wedge \ s_k > s_{k+1}$$

Recurring, decreasing

significance with:

bookworm

$$\forall_{i=0}^{k-1} s_i > s_{i+1} \ \wedge \ \forall_{j=k+1}^{l} s_j > s_{j+1} \ \wedge \ s_k < s_{k+1}$$

Decreasing and increasing

significance with:

bookWorm

$$\forall_{i=0}^{k-1} s_i > s_{i+1} \ \wedge \ \forall_{j=k+1}^{l} s_j < s_{j+1} \ \wedge \ s_k = s_{k+1}$$

increasing and decreasing

significance with:

$$\forall_{i=0}^{k-1} s_i < s_{i+1} \ \wedge \ \forall_{j=k+1}^{l} s_j > s_{j+1} \ \wedge \ s_k = s_{k+1}$$

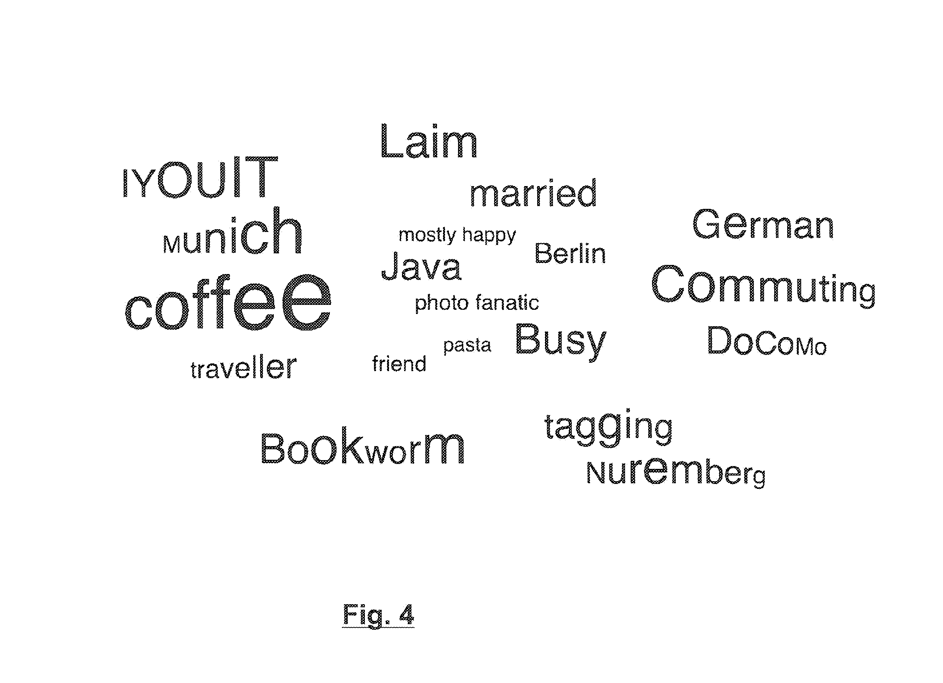

A tag cloud that has been reformatted by having identified groups of tags with similar significance distributions is shown in Figure 4.

Having identified certain groups within a tag cloud formation based on similar significance trends, a group based query restriction according to one embodiment reconsiders the given result-set with respect to the chosen significance trend only.

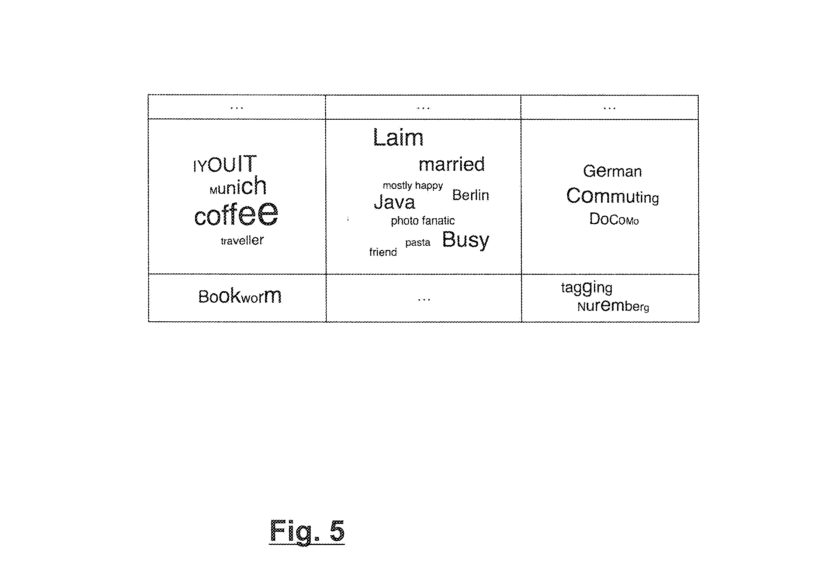

The layout of the resulting tag cloud formation according to one embodiment depends on the following paradigm: Each group of tags can in principle be seen as a detached cloud. The largest group of tags is placed in the middle of the resulting (combined) tag cloud, all subsequent groups are placed around the centered group. In the example shown in Figure 4, the cloud containing tags like "laim" and "busy", for instance, has been identified as the largest cloud and is therefore placed in the middle of the resulting combined tag cloud. The alignment is based on a matrix where the number of fields must be larger than the total number of identified trends (and such groups of tags). This way, an additional visual weight is put to the largest and therefore most important group of tags, which in turn facilitates a quicker navigation, selection and identification of single tags. Fig. 5 illustrates the matrix structure of the tag cloud shown in Fig. 4.

In the following there will be described a embodiment which makes use of color coded correlation significance distribution

In addition to the temporal significance distribution of a tag, its correlation with other tags of the same cloud over time is valuable metadata, too. The temporal correlation distribution can be defined as the number of correlation measurements of a certain group of tags as recorded during a specified time interval. The correlation as such can be based on co-occurrence measurements, a semantic dependency or any connection between those concepts that has been identified either with respect to the time, the physical space, or the common presence of another data item not present within the group.

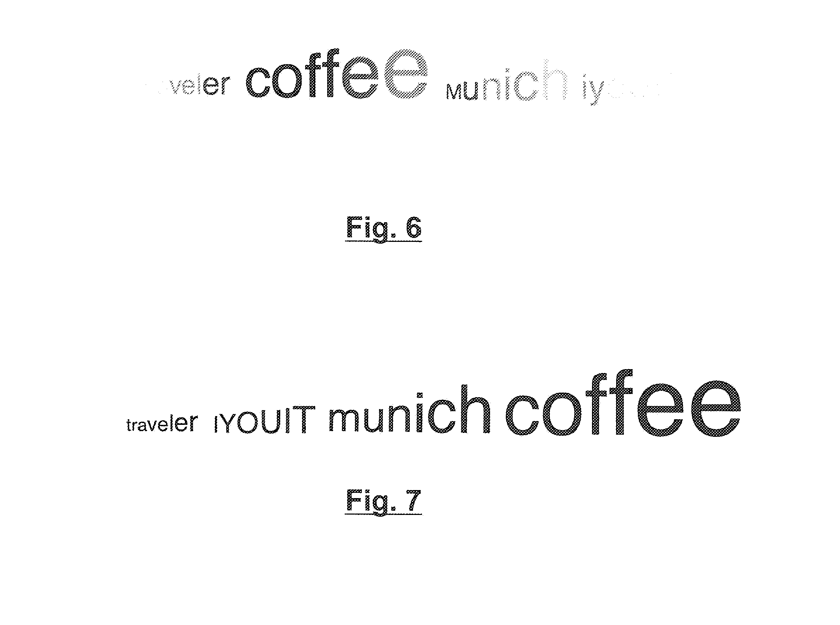

Contemplating identified groups of tags that have a common significance distribution over time allows for visualizing the group's correlation significance in a one-line formation, in which the x-axis can be seen as a timescale with the most recent measurements on the left, and the oldest measurement on the right (or otherwise round). A number of those tags grouped in one line again form a 2D tag cloud. Each tag within the group still holds its specific information about its own significance distribution, while the group's correlation significance over time is indicated by a fading color schema with 100% color saturation representing the highest correlation significance. Such a tag cloud may then look like as illustrated in Fig. 6.

The tags belonging to the group of Fig. 6 may not only be selected based on a similar temporal significance distribution, the tags may just be arbitrarily selected, e.g. by the user, and then the correlation between the tags over time may be displayed in the manner as shown in Fig. 6, namely by the color saturation varying over the x-axis which corresponds to the time.

It should further be mentioned that while different selection criteria for selecting the members of a group are mentioned in this and other embodiments, all these selection criteria could of course also be combined in any combination. E.g. the tags could also be selected based on their semantic similarity as described in another embodiment. Alternatively or additionally also always an arbitrary selection by the user is possible in one embodiment.

The color saturation that represents a groups' correlation distribution can be described by:

$$\forall_{i=0}^{k} x_i = X_{min} + (\frac{c_i}{C_{max}}) \times (X_{max} - X_{min}),$$

$$(X_{max} - X_{min}) > 0,$$

$$\vec{C} = [c_0, \ldots, c_k] \text{ with } \forall_{j=0}^{k} c_j . 0 \le c_j \le C_{max}$$

With:

$x_i$:     Color saturation for the respective section within a group of tags
$X_{max}$:  Maximal color saturation
$X_{min}$:  Minimum color saturation
$c_i$:     Given correlation significance sample
$C_{max}$:  Maximum correlation significance of the group

According to one embodiment also the ordering of tags within the group follows a certain paradigm. The most significant single tag is placed where the group's correlation significance is at its peak (in Figure 6, "coffee" has been identified as the most significant single tag, thus placed at the second position from left where the group's maximum correlation significance has been measured).

Group criterion:  Similar significance distribution (or arbitrary tag selection)
Tag shape:        Respective tag's significance distribution
Tag placement:    Place of the most significant single tag corresponds with the place of max correlation significance of the group formation
Group shape:      -
Color-coding:     Fading color indicates the group's correlation significance over time
Interaction:      Query restriction based on time period and common group criteria (similar significance distribution)

Now an example of how this visualization pattern may be used for navigation purposes will be described. For example, to further refine a given query and to diminish the result-set, distinct parts of the group can be selected. Hereby, the time period in which data items must have been recorded will be restricted to correspond to the selected region of the displayed correlation significance. Since not only a time period has been identified but also a certain group has been selected within the cloud, the resulting query will in one embodiment will also be defined by the common group criteria, in the example above a similar significance distribution over time.

In the following there will be described a embodiment which makes use of group-based significance distribution. In this embodiment the actual correlation between the tags of the group as well as the group's common criteria are of subsequent interest. Focusing on the group as such, its common criteria as well as the correlation between the tags within the group can be visualized as illustrated in Figure 7.

Here, the group's common criteria (a similar significance distribution) forms the whole group's shape, again aligned in one line, while the most significant tag of the group (in this case "coffee") is identified and subsequently visualized as the most prominent tag (in terms of font size in Fig. 7, could also be color saturation if that is chosen to express significance). The ordering of the given tags within the group formation is based on the correlation *degree* of a certain tag with respect to the most significant tag of the group. The correlation degree describes the dependency between two distinct tags within a group. In the example above, the tag "munich" has a higher correlation degree with "coffee" than "traveler".

The shape rendering can be described mathematically analog to a single tags' significance distribution as formalized in the first example, whereas the group of tags is hereby treated as one joined, single tag.

Group criterion: Similar significance distribution

| | |
|---|---|
| Tag shape: | Determines (and thus forms) the group's shape |
| Tag placement: | Most significant single tag is placed at group's max significance; remaining tags are ordered based on the correlation degree with respect to the most significant single tag |
| Group shape: group's shape | Common criterion (significance distribution over time) defines the |
| Color-coding: | - |
| Interaction: | Query restriction based on time period and common group criteria (similar significance distribution) |

Now there will be described an embodiment which makes use of a group-shaped correlation significance distribution.

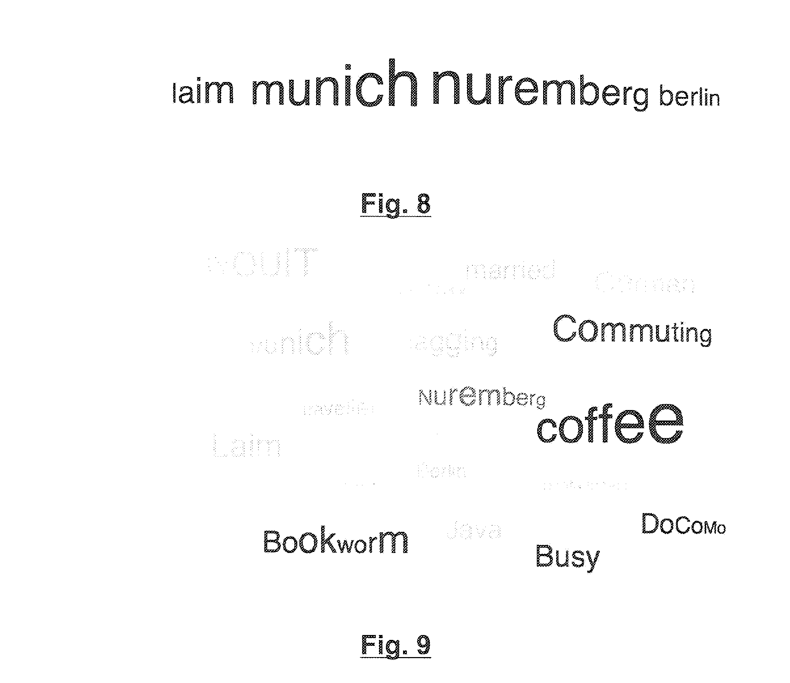

Characterizing the correlation of several tags over time, describes the significance of the correlation of the group as such. Thus all tags within the group have been selected based on a certain correlation (e.g. based on a semantic similarity), rather than a similar significance distribution as discussed in the previous examples. The proposed visualization paradigm then depicts the whole group's correlation significance over time whereas each distinct tag's significance distribution is not the prime intention any more, as shown in Figure 8.

The example that has been selected and visualized in Figure 8 describes a group of similar tags (all tags represent spatial concepts, the similarity criterion therefore here is "tags representing a spatial concept") and the group's correlation significance over time. Here, the significance of the above shown group has been first increasing, then followed by a steady decrease of the correlated significance. The shape of each single tag complies with the group's shape as such, which leads to a more prominent visualization of the entire group and its correlation significance over time. Again, the ordering of the tags within the group follows a certain principle. That is, the most significant single tag takes over the place where the highest significance value(s) are present. As a result, "munich" as the most significant tag of the group has been placed within the first part of the cloud formation, followed by "nuremberg", "laim" and "berlin".

The distribution of the correlation significance of the group can be described analog to the inner-tag significance distribution (as explained before), whereas the resulting Font-size vector is not described by the respective significance measurements but in fact determined by the group's correlation measurements.

$$\vec{F}(\vec{L}, \vec{C}) = \left[ f_0, ..., f_k \right] with$$

$$\forall_{i=0}^{k} f_i = F_{min} + (\frac{c_i}{C_{max}}) \times (F_{max} - F_{min}),$$

$$(F_{max} - F_{min}) > 0,$$

$$\vec{C} = \left[ c_0, ..., c_k \right] with \ \forall_{j=0}^{k} c_j . \ 0 \le c_j \le C_{max},$$

$$\vec{L} = \left[ l_0, ..., l_k \right]$$

With:

$\overline{L}$:          Vector of distinct sections of the cloud
$\overline{C}$:          Vector of correlation measurements over time
$C_{max}$:     Maximum correlation value
$F_{max}$:     Maximum font size
$F_{min}$:     Minimum font size

Group criterion:     Semantic or statistical similarity
Tag shape:          Complies (and thus forms) the group's shape
Tag placement:     Placed where the group has its highest correlation significance
Group shape:        Describes the group's correlation significance over time
Color-coding:       -
Interaction:         Query restriction based on time period and common group criteria (similar tag category)

Now there will be described an embodiment which makes use of a reference tag selection and correlation degree visualization.

Besides focusing on the significance of a tag over time, the formation of groups of tags and their correlation significance over time, the *degree* of the correlation *between* tags is another valuable meta-information of the represented data. By applying a certain color schema, such correlations can be made visible to indicate simple co-occurrences, semantic similarities or statistical interpretations. To highlight correlations between tags, a reference tag is selected. Assigning a certain reference color to its font with 100% saturation indicates the selection of the tag. All correlated tags are thus highlighted by the same color as the selected tag, whereas the degree of the correlation with the selected tag is equivalent to the saturation of the color applied to the correlated tag. This means that a high degree of correlation is indicated by a high percentage of color saturation, whereas a low percentage of color saturation is equivalent to a low degree of correlation. Figure 9 describes a sample tag cloud with "coffee" as the selected tag, in which correlated tags such as "commuting" or "busy" are indicated by a fading color saturation.

The actual selection of a tag may have two different effects. For one, the described correlation degree visualization (as described above) may focus on correlation dependencies within the given cloud. Another feasible pattern is a correlation-based navigation within the dataset. Here, whenever a certain tag has been selected, a query may be compiled to retrieve only correlated tags. This way, only a subset of correlated information is regarded to provide efficient means to find meaningful information.

Now there will be described an embodiment which makes use of temporal correlation degree visualization.

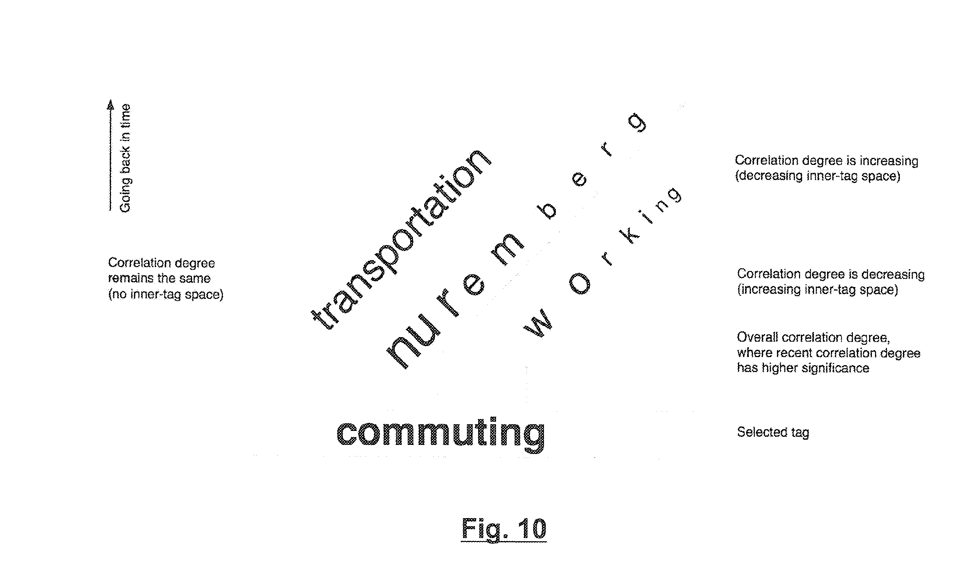

By utilizing inner-tag white-spacing or font-spacing, not only a relative time period can be encoded within a single tag's representation (as exemplified before), but alternatively its correlation degree over time with (respect to a reference tag) can be described. Here, an increasing inner-tag space indicates a decreasing correlation degree and vice versa. No variation of the inner-tag space indicates a steady correlation degree over time. The average correlation degree of two tags can then also be weighted, whereas recent correlation degrees have a higher weight. This is schematically illustrated in Fig. 10, where the reference tag is "commuting" and the increasing white space of the tag nuremberg indicates that its correlation with the tag "commuting" is decreasing over time. On the other hand, for the tag "working" the correlation with the term "commuting" is increasing over time, as indicated by the decreasing white spaces between the characters.

For each tag further the overall correlation degree (e.g. averaged over time, where the more recent correlation values may be given a higher weight) are indicated, as can be seen by the individual single lines in y-direction. It can be seen that the overall correlation with the tag "commuting" is about the same for the tags "transportation" and "working", and it is somewhat lower for the tag "nuremberg".

The white-spacing correlation degree distribution can be described by:

$$\vec{S}(\vec{C}) = \left[ s_0, ..., s_k \right] with$$

$$\forall_{i=0}^{k} s_i = S_{min} + (\frac{c_i}{C_{max}}) \times (S_{max} - S_{min}),$$

$$(S_{max} - S_{min}) > 0,$$

$$\vec{C} = \left[c_0, \ldots, c_k\right] \text{ with } \forall_{j=0}^{k} c_j . 0 \leq c_j \leq C_{max}$$

With:

$s_i$ :    Space in between two inner-tag's sections (e.g. letters)

$S_{min}$ :    Minimum (default) space between two inner-tag's sections (e.g. letters)

$S_{max}$ :    Maximum space between two inner-tag's sections (e.g. letters)

$c_j$ :    Measured correlation degree for the concerned tag

$C_{max}$ :    Maximum correlation degree

The average weighted correlation degree A can be described by:

$$A(\vec{C}, W) = \sum_{i=1}^{k} \left( \frac{c_i \times W}{i} \right) with$$

$$\vec{C} = \left[c_1, \ldots, c_k\right] \text{ with } \forall_{i=1}^{k} c_i . 0 \leq c_i \leq C_{max},$$

$$W > 0$$

With:

A:    Average, weighted correlation degree
$\overline{C}$:    Vector of correlation measurements of a given tag over time
$C_{max}$:    Maximum correlation value
W:    Weighting factor

Once a reference tag ("commuting") has been selected, a distinct number of correlated tags is placed above, slightly rotated to intensify the visual effect of increasing or decreasing distance between the reference tag and the correlated tags. A query or browsing based on such a visualization can e.g. be implemented such that whenever the aforementioned reference tag is re-selected, the next group of (less) correlated tags is positioned in a similar manner, replacing the previously shown group of correlated tags.
In the following some of the embodiments which have been explained before will once again be summarily to compiled by illustrating the metainformation which is displayed together with its corresponding graphical visualization.

Inner-tag significance distribution                              aaaaaaaaa

(continued)

| | |
|---|---|
| Inner-tag time period vizualisation | C o m m u t i n g |
| In-line grouping based on similar significance distribution of single tags with color-coded correlation significance distribution | veler coffee munich iyout |
| In-line grouping based on similar significance distribution of distinct tags, group's forms the common tag criterion | traveler IYOUIT munich coffee |
| In-line grouping based on semantic or statistical similarity of distinct tags, group's shape forms the group's correlation significance over time | laim munich nuremberg berlin |
| Color-coding for visualizing the correlation degree between distinct tags and a corresponding reference tag | Commuting Nuremberg coffee Bookworm Busy DoCoMo |
| Reference tag selection for correlation degree visualization. An increasing inner-tag space indicates a decreasing correlation degree and vice versa. No variation of the inner-tag space indicates a steady correlation degree over time | transportation nuremberg working commuting |

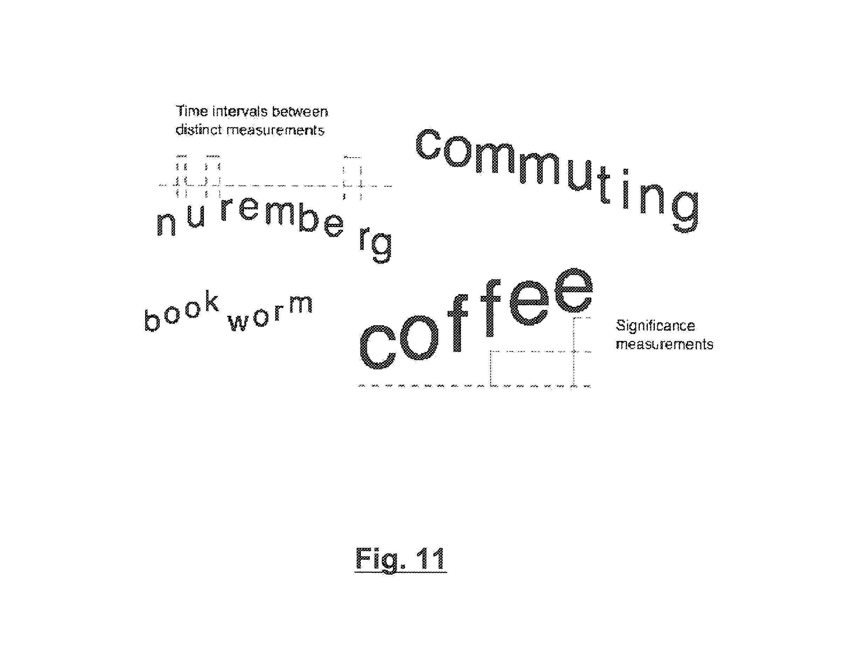

In the embodiments described so far there have largely been used three ways of visualizing the metainformation for a tag, namely the font size, the color saturation, and the inner space between said slices. It should however be mentioned that also further ways may be used to visualize the metainformation for the individual slices of the tags in order to display its temporal change. Any suitable way for visualizing graphically for a slice of a tag an information which corresponds to a certain quantity of the metainformation associated with the tag may be used. One further such example is illustrated in Fig. 11 where tag's atomic elements (the "slices") are placed on a virtual stairway, whereas one distinct significance measurement is indicated by the actual height with respect to a baseline. Therefore, an element that is more significant is placed higher than less significant elements. The computation of the actual range of height values is similar to the previous font size computation and can be described by:

With:

$\bar{L}$:      Vector of distinct sections of a given tag
$\bar{S}$:      Vector of significance measurements of a given tag over time

$S_{max}$: Maximum significance value
$H_{max}$: Maximum height with respect to baseline
$H_{min}$: Minimum height with respect to baseline

The formula below maps the given range of significance values to the respective range of height values of a distinct tag, described by the resulting height vector $\dot{H}$.

$$\vec{H}(\vec{L},\vec{S}) = [h_0,...,h_k]\, with$$

$$\forall_{i=0}^{k} h_i = H_{min} + (\frac{s_i}{S_{max}}) \times (H_{max} - H_{min}),$$

$$(H_{max} - H_{min}) > 0,$$

$$\vec{S} = [s_0,...,s_k]\, with\, \forall_{j=0}^{k} s_j. 0 \leq s_j \leq S_{max},$$

$$\vec{L} = [l_0,...,l_k]$$

Since the time intervals between historic measurements of significance values may also be different, the inner-tag space may indicate this temporal divergence. In one embodiment smaller spaces are equivalent to a shorter time interval, larger spaces mean longer time intervals, as illustrated in the upper left part of Fig. 11.

It has been mentioned already that in principle the use of different fonts for a single tag for indicating either the significance, correlation distribution or a certain time interval is also possible (this was explained in an earlier embodiment, where as an example is given which mentions the use of the fonts Arial Regular & Arial narrow).

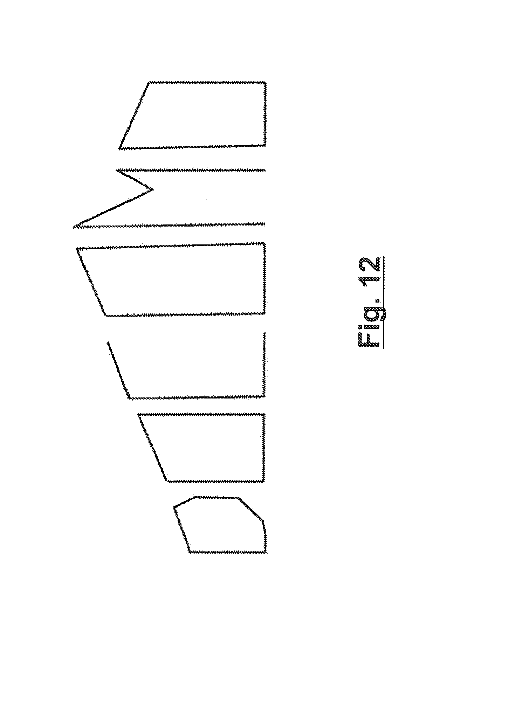

In addition to this, however, also a special type of font could be used, as illustrated in Figure 12 for the tag "docomo". In case of such a font the size even inside a character may change, and such a font may be constructed by providing individual slices for each character which then may change their size in accordance with the significance value to be visualized, as can be seen from Fig. 12.

More generally speaking one may tehrefore say that in one embodiment the visualization of the metainformation is preformed by changing a visualization parameter for individual the slices of a tag based on the quantity of the metainformation, where the visualization parameter is chosen such that for the slice of a font it is capable to indicate such a quantity of a metainformation.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise computing device or a mobile phone or any mobile device which is suitably programmed such that it is able to carry out a delegated transaction as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

**Claims**

1. A computer-implemented method of visualizing a tag cloud of individual tags, wherein each is a certain piece of information and is formed of one or more characters, and wherein for a tag metainformation has been measured over a certain time interval so that there exists a vector of metainformation measurements for said tag, each component of said vector representing a certain metainformation measurement, said method comprising:

dividing a tag into a plurality of slices;
mapping said vector of metainformation measurements of said tag over time such that each slice of said tag corresponds to one or more of said metainformation measurements;
visualizing the temporal change of said metainformation measurements for said tag by changing for each of said slices one or more of the following parameters depending on the corresponding one or more metainformation measurements:

the font size,
the color saturation;
the inner space between said slices;
the actual height on which the individual slices are placed on a virtual stairway, whereas one distinct significance measurement is indicated by the actual height with respect to a baseline.

2.   The method of claim 1, wherein said metainformation is one of the following:

the significance of a tag,
the correlation significance between tags.

3.   The method of claim 1 or 2, wherein
the total period of time which is mapped onto a certain tag is graphically represented by the total length of said tag.

4.   The method of one of the preceding claims, further comprising:

identifying for each tag to which temporal pattern of a plurality of predefined temporal pattern it belongs, and grouping the tags together which belong to the same pattern.

5.   The method of one of the preceding claims, wherein a plurality of tags which belonging to the same group of tags are selected by
a similarity criterion, or
arbitrarily by a user, and wherein for the tags of said group metainformation is displayed by one or more of the following:

a change in font size;
a change in color saturation.

6.   The method of one of the preceding claims, wherein a plurality of tags which form a group is aligned in a row and said group is divided into slices, each slice representing a certain time period, wherein the vector of metainformation to be visualized is representing the correlation significance between said elements of said group over time, said vector of metainformation being mapped onto said slices of said group of tags such that the visual representation of said group of tags illustrates the change of the correlation between the tags of said group over time based on a change of font size or color saturation.

7.   The method of one of the preceding claims, comprising:

selecting a group of tags based on a similarity criterion and aligning them in a row and said group being divided into slices, wherein the overall shape of the group is based on the temporal change of the metainformation which corresponds to the similarity criterion, and/or
with the tags of the group being ordered such that the tag of the group which has the highest individual significance is located at the position with the highest font size or color saturation and the other tags are ordered according to their correlation with the tag having the highest significance.

8.   The method of one of the preceding claims, wherein
a group of tags has been selected based on a similarity criterion according to which the members of said group have a certain similarity, and the overall correlation significance of the correlation between the group members over time is visualized by
a changing font size which changes in accordance with the correlation significance change over time; or
a color saturation change which changes in accordance with the correlation significance change over time.

9. The method of one of the preceding claims, comprising:

   selecting one tag as reference tag;
   graphically visualizing the correlation of other tags with said selected tag by displaying said other tags such that the degree of correlation with said reference tag is expressed by
   the font size of said other tags; or
   the color saturation of said other tags.

10. The method of claim 9, wherein
    the inner significance of a tag over time is expressed by one of its font size or color saturation; and
    the correlation significance of a tag with said selected tag over time is represented by the other one of said font size or said color saturation.

11. The method of one of the preceding claims, wherein a reference tag is selected and other tags are simultaneously displayed in a manner which indicates their respective correlation with said selected tag over time, wherein said correlation is indicated by the space between slices or characters of a tag are changing in accordance with the change of said correlation, or
    the color saturation changing in accordance with the change of said correlation.

12. The method of claim11, further comprising:

    in addition to visualizing the correlation of a tag with said reference tag over time, further visualizing the overall correlation of said tag with said reference tag.

13. The method of one of the preceding claims, wherein
    said visualization of said tag cloud enables the user to query or browse context information as represented by said tag cloud based on the metainformation represented in said tag cloud, said metainformation being one or more of the following:

    temporal change of a tag significance over time,
    temporal change of a correlation significance between tags over time, any metainformation about the tags of said tag cloud as graphically visualized by said tag could.

14. A computing apparatus for visualizing a tag cloud of individual tags, wherein each is a certain piece of information and is formed of one or more characters, and wherein for a tag metainformation has been measured over a certain time interval so that there exists a vector of metainformation measurements for said tag, each component of said vector representing a certain metainformation measurement, said apparatus comprising:

    means for dividing a tag into a plurality of slices;
    means for mapping said vector of metainformation measurements of said tag over time such that each slice of said tag corresponds to one or more of said metainformation measurements;
    means for visualizing the temporal change of said metainformation measurements for said tag by changing for each of said slices one or more visualization parameters, wherein said visualization parameters preferably comprise one or more of the following parameters depending on the corresponding one or more metainformation measurements:

    the font size,
    the color saturation;
    the inner space between said slices;
    the actual height on which the individual slices are placed on a virtual stairway, wherein one distinct significance measurement is indicated by the actual height with respect to a baseline.

15. A computer program comprising computer program code which when being executed on a computer enables said computer to carry out a method according to one of claims 1 to 13.

amsterdam animals april architecture art asia australia baby band barcelona beach berlin bird birthday black blackandwhite blue boston bw california cameraphone camping canada canon car cat chicago china christmas church city clouds color concert cute dance day de dog england europe fall family festival film florida flower flowers food france friends fun garden geotagged germany girl girls graffiti green halloween hawaii hiking holiday home honeymoon house india ireland island italy japan july kids la lake landscape light live london macro me mexico mountain mountains museum music nature new newyork newyorkcity newzealand night nikon nyc ocean paris park party people photo photos portrait red river rock rome san sanfrancisco scotland sea seattle show sky snow spain spring street summer sun sunset sydney taiwan texas thailand tokyo toronto travel tree trees trip uk urban usa vacation vancouver washington water wedding white winter yellow york zoo

EP 2 136 301 A1

**Fig. 1**

Fig. 2

tagging

IYOUIT

mostly happy

married

German

Commuting

Munich

Nuremberg

traveler

coffee

pasta

Laim

Berlin

friend

photo fanatic

bookworm

Java

DoCoMo

busy

EP 2 136 301 A1

Fig. 3

Fig. 4

EP 2 136 301 A1

| ... | ... | ... |
|---|---|---|
| IYOUIT<br>MUNICH<br>coffee<br>traveller | Laim<br>married<br>mostly happy  Berlin<br>Java<br>photo fanatic<br>friend  pasta  Busy | German<br>Commuting<br>DoCoMo |
| BOOKworm | ... | tagging<br>Nuremberg |

**Fig. 5**

veler coffee munich iy...

**Fig. 6**

traveler IYOUIT munich coffee

**Fig. 7**

EP 2 136 301 A1

laim **munich** nuremberg berlin

**Fig. 8**

vCUIT married German

munich tagging Commuting

traveller Nuremberg coffee

Laim Berlin

Bookworm Java DoCoMo

Busy

**Fig. 9**

EP 2 136 301 A1

**Fig. 10**

Fig. 11

EP 2 136 301 A1

Fig. 12

**European Patent Office**

**EUROPEAN SEARCH REPORT**

Application Number

EP 08 15 8690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TERRELL RUSSELL: "Tag Decay: a view into aging folksonomies" ASIS&T 2007 ANNUAL MEETING, [Online] 19 October 2007 (2007-10-19), - 24 October 2007 (2007-10-24) XP002497595 Milwaukee, Wisconsin, USA Retrieved from the Internet: URL:http://weblog.terrellrussell.com/2007/11/tag-decay-poster-from-asist-is-online/> [retrieved on 2008-09-25] * the whole document * ----- | 1-15 | INV. G06F17/21 ADD. G06F17/30 |
| A | US 2008/072145 A1 (BLANCHARD JOHN A [US] ET AL) 20 March 2008 (2008-03-20) * abstract * * paragraph [0001] - paragraph [0007] * * paragraph [0021] * * figure 6 * ----- | 1-15 | |
| A,D | KASER O ET AL: "Tag-Cloud Drawing: Algorithms for Cloud Visualization" INTERNATIONAL WORLD WIDE WEB CONFERENCE 16TH, XX, XX, [Online] no. 16TH, 8 May 2007 (2007-05-08), pages 1-10, XP002486153 Retrieved from the Internet: URL:http://www2007.org/workshops/paper_12.pdf> [retrieved on 2008-09-25] * sections 1,2, 4 * * abstract * ----- -/-- | 1-15 | **TECHNICAL FIELDS SEARCHED (IPC)** G06F |

The present search report has been drawn up for all claims

| Place of search | Date of completion of the search | Examiner |
|---|---|---|
| Berlin | 26 September 2008 | Woods, Justin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 08 15 8690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARK WOODMAN: "JetStream: Temporal Tag Clouds and Constellations" TECHBREW.NET, [Online] 8 February 2007 (2007-02-08), XP002497596 Retrieved from the Internet: URL:http://techbrew.net/articles/200702/je tstream/> [retrieved on 2008-09-26] * the whole document * | 1-15 | |
| A,D | DUBINKO, M.; KUMAR, R.; MAGNANI, J.; NOVAK, J.; RAGHAVAN, P.; TOMKINS, A.: "Visualising tags over time" WWW 2006, [Online] 23 May 2006 (2006-05-23), - 26 May 2006 (2006-05-26) XP002497597 Edinburgh, Scotland Retrieved from the Internet: URL:http://www2006.org/programme/files/pdf /25.pdf> [retrieved on 2008-09-26] * sections 1-3 * * abstract * | 1-15 | TECHNICAL FIELDS SEARCHED (IPC) |
| A | GB 2 444 284 A (MOTTE YANN EMMANUEL [FR]; GREENWOOD MARCUS GILL [GB]) 4 June 2008 (2008-06-04) * abstract * | 1-15 | |

The present search report has been drawn up for all claims

| Place of search | Date of completion of the search | Examiner |
|---|---|---|
| Berlin | 26 September 2008 | Woods, Justin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 08 15 8690

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2008

| Patent document cited in search report | | Publication date | Patent family member(s) | | Publication date |
|---|---|---|---|---|---|
| US 2008072145 | A1 | 20-03-2008 | CA | 2602852 A1 | 19-03-2008 |
| GB 2444284 | A | 04-06-2008 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Yusef Hassan-Montero ; Victor Herrero-Solana.** Improving Tag Clouds as Visual Information Retrieval Interfaces. *International Conference on Multidisciplinary Information Sciences & Technologies,* 2006

- Owen Kaser and Daniel Lemire, Tag-Cloud Drawing: Algorithms for Cloud Visualization. *Tagging and Metadata for Social Information Organization. World Wide Web Conference,* 2007
- **Micah Dubinko ; Ravi Kumar ; Joseph Magnani.** Visualizing Tags over Time. *World Wide Web Conference,* 2007